# FASCICULE DE BREVET EUROPEEN

(11) **EP 0 728 820 B1**
(45) Date de publication et mention de la délivrance du brevet: **21.04.2004**
(21) Numéro de dépôt: 96400281.0
(22) Date de dépôt: 12.02.1996
(51) Int. Cl.: C09D 11/00

(54) **Composition d'encre pour le marquage et l'authentification d'objets**
Tintenzusammensetzung zur Markierung und Identifizierung von Gegenständen
Ink composition for marking and identification of objects

(30) Priorité: 14.02.1995 FR 9501665
(43) Date de publication de la demande: 28.08.1996
(73) Titulaire: IMAJE S.A., 26500 Bourg les Valence (FR)
(72) Inventeur: de Saint-Romain, Pierre, F-26000 Valence (FR); Heraud, Alain, F-26000 Valence (FR)
(74) Mandataire: Poulin, Gérard

(56) Documents cités:
- EP-A- 0 253 543
- EP-A- 0 314 350
- EP-A- 0 327 788
- WO-A-91/05833
- US-A- 5 084 205
- US-A- 5 135 569

## Description

L'invention concerne une composition d'encre pour le marquage et l'authentification d'objets.

L'impression par jet d'encre est une technique bien connue qui permet l'impression, le marquage ou la décoration de toute sorte d'objets, à grande vitesse et sans contact du dispositif d'impression avec lesdits objets. Des messages variables à volonté peuvent ainsi être réalisés sur des supports plans ou non, tels que du papier, du tissu, des céramiques, des matières plastiques ou du métal par exemple. Ces systèmes d'impression peuvent être du type "goutte à la demande", ou du type "jet continu".

Les ingrédients qui composent les encres actuelles sont des produits organiques, des colorants ou des pigments dissous dans des solvants plus ou moins volatils ou dans de l'eau, des résines ainsi que divers additifs qui apportent la stabilité chimique ou la conductivité nécessaire à la déviation électrostatique, notamment dans le cas des imprimantes à jet d'encre continu.

Dans le cadre de la lutte contre la contrefaçon, contre la réalisation de photocopies interdites ou plus généralement pour assurer une authenticité à certains documents, des encres spécifiques ont été développées. Ces encres comprennent des produits incolores, c'est-à-dire invisibles à l'oeil nu en lumière visible, mais que l'on peut observer :
a) soit en les illuminant avec une lumière de longueur d'onde particulière comme les ultraviolets, ce qui provoque la fluorescence ou la phosphorescence de l'encre qui devient alors visible,
b) soit en les faisant réagir avec d'autres produits qui les rendent visibles à l'oeil nu.

Dans le cas a) précité, le changement de couleur est réversible. Dès que cesse l'exposition à la lumière particulière (U.V.) et après un temps très court, l'encre retrouve son apparence initiale invisible. Le type de composé responsable de ce phénomène absorbe la lumière à une certaine longueur d'onde et la réémet à une longueur d'onde plus grande pendant le temps de l'exposition. De telles encres sont notamment divulguées dans les documents US 4,153,593 et US 4,328,332.

Le document US 4,153,593 décrit une encre fluorescente susceptible d'être utilisée dans une machine d'impression à jet d'encre et comprenant de l'eau, un humidifiant et une combinaison d'une encre fluorescente et d'un agent d'avivage de la fluorescence.

Le document US 4,328,332 décrit une encre pour impression par jet d'encre et plus particulièrement les résines fluorescentes utilisées pour la fabrication de cette encre.

Dans le cas b) précité, le changement de couleur est irréversible. De telles compositions sont décrites par exemple dans le document US 4,029,506 concernant une composition de marquage comprenant un produit photosensible devenant coloré en présence d'un pigment. Plus précisément, cette composition de marquage comprend une composition incolore sensible aux radiations, un pigment capable de réfléchir la longueur d'onde de la lumière absorbée par le pigment et un liant polymère incolore. Cette composition de marquage est utilisée pour recouvrir la surface d'un produit, puis le revêtement ainsi formé est exposé aux radiations du spectre visible selon un dessin spécifique, de façon à former, des zones exposées et non exposées présentant des différences dans la densité de réflectance suffisamment appréciables pour permettre la lecture du marquage ainsi formé.

Plus récemment, des produits ayant la particularité de changer de spectre d'absorption sous l'effet de la lumière sont apparus. Ces produits sont appelés "encres photochromes". Les documents EP 0 327 788 et GB 2 192 006 décrivent diverses applications de ces encres. Généralement, ces encres photochromes sont invisibles dans des conditions d'éclairage normal et deviennent visibles, c'est-à-dire d'une couleur bleue ou verte par exemple, après illumination sous une lumière ultraviolette. Ainsi, par exemple, un document sur lequel des inscriptions sont portées à l'encre bleue ou verte sur un fond recouvert d'une encre photochrome ne peut être photocopié. En effet, lorsque le document est exposé aux radiations de la photocopieuse, le fond du document se teinte en bleu ou en vert et les inscriptions portées à l'encre classique ne peuvent plus se distinguer du fond.

Le document EP 0 327 788 divulgue une encre photochrome pour impression réversible. Cette encre comprend un liant polymère, une phase liquide, et un composé photochrome protégé de l'oxygène par une composition polymère. Cette encre peut être utilisée pour imprimer des billets de banque, des chèques, des chèques de voyage, des timbres, des passeports, ou de tickets de bateau ou d'avion par exemple ou tout autre document similaire pour lesquels des mesures contre la contrefaçon doivent être prises.

Le document GB 2 192 006 décrit une encre photochrome pour un marquage irréversible. La composition d'encre comprend une solution de 1,2-dihydroquinoline (DHQ) dans une solution polymère. Le marquage irréversible est obtenu après irradiation sous une lumière ultraviolette.

Toutefois, les encres précitées ne permettent pas de résoudre tous les problèmes d'authentification. Ainsi, de nombreux objets tels que du papiers à entête, des enveloppes, des tissus, des emballages de matière plastique, etc... sont munis d'un marquage visible à l'oeil nu, (c'est-à-dire dans le domaine du visible) et destiné à indiquer par exemple, une adresse, une indication de provenance, une marque déposée, la composition d'un produit ou son code-barre.

Toutefois, ces produits sont parfois copiés et leur marquage peut être falsifié de façon à indiquer des informations légèrement différentes de celles figurant normalement sur les produits d'origine, c'est le cas par exemple des adresses ou des code-barres. Par ailleurs, d'autres produits, tels les produits de luxe par exemple, peuvent être copiés par des produits d'apparence semblable mais de qualité médiocre sur lesquels une marque prestigieuse est recopiée à l'identique. Enfin, dans le domaine de l'affranchissement postal, certains envois en grand nombre comme les journaux ne sont pas affranchis à l'aide de timbres mais à l'aide d'une inscription comportant un code et un numéro de routage. Ces indications peuvent être reproduites de façon illicite, sans que la somme normalement due pour l'affranchissement ne soit payée, par exemple.

L'invention a pour but de mettre au point une composition d'encre permettant le marquage classique des produits, c'est-à-dire un marquage visible dans le domaine de la lumière visible, et assurant simultanément une authentification du produit marqué par un changement de la couleur du marquage dans certaines conditions. De préférence, ce phénomène de changement de couleur doit être réversible, de façon à permettre plusieurs vérifications successives de l'authenticité du produit marqué.

A cet effet, l'invention concerne une composition d'encre pour le marquage et l'authentification d'objets.

Selon les caractéristiques de l'invention, elle comprend au moins :
- un colorant ou un pigment non photochrome, (de préférence jusqu'à 15 % en poids environ)
- un colorant ou un pigment photochrome, (de préférence jusqu'à 10% en poids environ) et
- un solvant,
le colorant ou le pigment photochrome changeant de spectre d'absorption sous l'effet d'une première lumière émettant selon une longueur d'onde appartenant au domaine ultraviolet, de telle sorte que lorsqu'il est éclairé ensuite et seulement par une deuxième lumière émettant selon une longueur d'onde appartenant au domaine visible, il présente une ("deuxième") couleur différente de celle qu'il présentait, sous éclairement de ladite deuxième lumière, avant son illumination par ladite première lumière, ladite ("deuxième") couleur étant également différente de celle présentée par le colorant ou le pigment non photochrome lorsque celui-ci est éclairé par ladite deuxième lumière.

La matière est appelée respectivement colorant ou pigment suivant qu'elle est soluble ou insoluble et donc dispersée, dans le solvant utilisé.

Ainsi par exemple, on peut choisir un colorant ou un pigment photochrome qui est invisible dans le domaine du visible et qui devient bleu ou vert après qu'il ait été soumis à un rayonnement ultraviolet et un colorant ou un pigment non photochrome qui est rouge ou de n'importe quelle couleur sauf bleu ou vert lorsqu'il est dans le domaine du visible.

Selon un autre mode de réalisation de l'invention, le pigment ou le colorant non photochrome peut être fluorescent par exemple sous illumination ultraviolette ou sous illumination dans le visible.

Ainsi, par exemple, on peut combiner un colorant non photochrome orange fluorescent sous la lumière visible et un colorant photochrome invisible sous la lumière visible mais devenant bleu après illumination aux rayonnements ultraviolets, à cause de l'absorption de la lumière orange issue du colorant non photochrome.

Le phénomène est réversible et le marquage ainsi réalisé retrouvera sa couleur initiale en un temps qui peut varier de quelques secondes à quelques heures, à l'abri de la lumière d'excitation du colorant photochrome.

Grâce à ces caractéristiques de l'invention, si un faussaire se contente de reproduire le marquage avec une encre classique de même couleur (en lumière visible) que celle du colorant ou du pigment non photochrome, son faux sera aisément détectable après passage sous U.V. puisqu'il ne changera pas de couleur. L'emploi d'une composition selon l'invention plus complexe et plus coûteuse à mettre en oeuvre rend plus difficile la tâche des faussaires.

La composition d'encre peut également comprendre une résine ou un polymère synthétique ou naturel, un sel de conductivité et/ou un additif.

De façon avantageuse, le colorant ou le pigment photochrome est choisi parmi le stylbène, l'indigo, le thio-indigo, les spiropyrannes, les spirooxazines, les fulgides, les dithizonates, les endopéroxydes ou leurs dérivés.

Le colorant ou le pigment non photochrome peut être un produit de type colorant soluble dans les solvants (connu sous le terme anglais "solvent dye") un pigment ou un colorant acide ou basique, direct, réactif (selon la définition du Colour Index, ou un produit non référencé dans le Colour Index) pourvu que sa couleur et sa solubilité soient compatibles avec le reste de la composition. Le pigment ou colorant non photochrome n'est pas obligatoirement fluorescent mais comme cela est déjà mentionné ci-dessus et selon un mode de réalisation de l'invention le pigment ou colorant non photochrome peut aussi être fluorescent par exemple sous illumination ultraviolette ou sous illumination dans le visible.

Le solvant utilisé est généralement de l'eau ou un solvant organique choisi parmi les alcools, les cétones, les esters ou les hydrocarbures aromatiques. Parmi les alcools, on peut citer le méthanol, l'éthanol et les propanols (moins toxiques pour l'utilisateur) ou le glycérol et parmi les cétones, on peut citer la cyclohexanone ou les cétones aliphatiques, telles que la méthyléthylcétone ou la méthylisobutylcétone. Ces solvants sont choisis de façon que la solubilité des colorants ou la dispersibilité des pigments soit suffisante.

Le choix des résines est dicté par leur solubilité dans les solvants sélectionnés et par leur compatibilité avec les colorants et autres additifs utilisés. Ces résines sont généralement choisies parmi les résines acryliques, vinyliques, cétoniques, phénoliques, cellulosiques, styréniques, polyester, époxy ou polyuréthanne. Le rôle de ces résines est de favoriser l'adhérence au colorant sur le support sélectionné. Lorsque l'encre est déposée sur un support poreux du type papier ou tissu par exemple, la résine n'est pas obligatoire. Par contre, lorsque l'on utilise des supports non poreux, telles que des matières plastiques ou du métal, la résine est nécessaire pour fixer le marquage réalisé.

Le sel de conductibilité n'est utilisé que lorsque la composition d'encre est destinée à être employée dans une imprimante à "jet d'encre continu". Dans ce type d'imprimante, un unique jet d'encre formé par une buse est brisé en plusieurs petites gouttelettes de taille identique. Ces gouttelettes sont chargées électriquement par passage à travers deux électrodes de charge puis elles sont déviées dans l'espace sous l'action d'un champ électrique régnant entre deux électrodes de déflexion. Ainsi, les gouttelettes se déplacent en fonction de leur charge dans un plan perpendiculaire au sens de déplacement du substrat sur lequel est effectué le marquage. Ce sel de conductivité est un sel ionisable, en particulier un sel de métal alcalin ou alcalino-terreux ou un sel d'ammonium ou d'amine, choisi parmi les chlorures, les bromures, les iodures, les thiocyanates, les nitrates, les perchlorates, les acétates et les propianates. De préférence, ce sel est le thiocyanate de sodium.

L'additif est avantageusement un agent anti-moussant, un stabilisant chimique, un stabilisant U.V., un bactéricide ou un fongicide pris seuls ou en combinaison.

L'invention sera mieux comprise à la lecture de la description suivante d'un mode de réalisation de l'invention donné à titre d'exemple illustratif et non limitatif.

Les compositions d'encre suivantes ont été préparées en mélangeant les produits cités dans le tableau 1 ci-dessous.

**Tableau 1**

| | | Ex. 1 % en masse | Ex. 2 % en masse | Ex. 3 % en masse | Ex. 4% en masse |
|---|---|---|---|---|---|
| colorant non photochrome | colorant orange fluorescent n°1 | 5 | 5 | 0 | 4,6 |
| | colorant orange fluorescent n°2 | 0 | 0 | 11,8 | 0 |
| colorant photochrome | colorant n°1 : spirooxazine | 1 | 1 | 0,2 | 0 |
| | colorant n°2 : spirooxazine | 0 | 0 | 0 | 0,9 |
| liant : résines | résine acrylique | 20,7 | 0 | 0 | 0 |
| | résine phénolique | 0 | 29 | 0 | 0 |
| | résine cétonique | 0 | 0 | 0 | 36,1 |
| sel de conductibilité | thiocyanante de sodium | 1 | 1 | 1 | 2,2 |
| solvants | méthyl-éthyl cétone | 72,3 | 64 | 0 | 56,1 |
| | éthanol à 95 % | 0 | 0 | 87 | 0 |
| paramètres physiques | viscosité (mPa.s) | 4,3 | 5,7 | 4,7 | 4,9 |
| | conductivité (mS/cm) | 1,12 | 0,93 | 1,24 | 0,82 |

Les quatre compositions d'encre ainsi préparées ont été testées dans des imprimantes de type IMAJE Série 7 fabriquées par la Société IMAJE et permettent d'obtenir des impressions d'excellente qualité. Par ailleurs, des films de plus grandes dimensions ont été réalisés sur différents supports plastiques et papiers afin de mesurer leurs couleurs sur un à-plat homogène. A l'aide d'un colorimètre "Tristimulus", on a mesuré la couleur (a*b*) et la clarté (L*) des films ainsi formés avant, et immédiatement après, l'illumination par un rayonnement ultraviolet. Les valeurs respectives de L*, a*b* sont données ci-après pour chacun des quatre exemples précités, (a* représente la composante selon l'axe vert-rouge et b* la composante selon l'axe bleu-jaune du plan coloristique). On notera qu'une différence de quelques unités de a* ou b* est parfaitement visible à l'oeil nu. Dans les exemples qui suivent, le changement de couleur est obtenu par une illumination pendant une durée de 5 minutes à l'aide d'une lampe U.V. de 8 Watts, placée à 5 cm du film recouvert d'encre. La lampe utilisée émet la plus grande partie de son rayonnement vers 350 nm.

### Exemple 1

Le colorant photochrome utilisé est incolore dans le domaine du visible et devient bleu après illumination en lumière ultraviolette. Le colorant non photochrome est orange fluorescent. Le marquage obtenu est orange fluorescent dans le domaine visible et devient ocre non fluorescent après une illumination U.V.

Les valeurs de L*, a* et b* avant et après illumination sont les suivantes :

| | L* | a* | b* |
|---|---|---|---|
| avant | 91,3 | 30,2 | 42,5 |
| après | 96,2 | 16,6 | 33,9 |

Le retour à la couleur de départ est obtenu en 10 minutes environ.

### Exemple 2

Les colorants et le solvant utilisés sont les mêmes que dans l'exemple 1. Le liant est d'un type différent. Les valeurs de L*, a* et b* avant et après illumination sont les suivantes :

| | L* | a* | b* |
|---|---|---|---|
| avant | 75,7 | 6,6 | 23,6 |
| après | 61,4 | -14,8 | 5,8 |

Le marquage obtenu est brun non fluorescent dans le domaine visible et devient gris-vert non fluorescent après une illumination U.V.

Le retour à la couleur de départ est obtenu en plus de 20 minutes.

### Exemple 3

Le colorant photochrome utilisé est encore le même que dans l'exemple 1. Le colorant fluorescent est d'un type différent des exemples précédents et la solution est préparée dans de l'éthanol.

Les valeurs de L*, a* et b* avant et après illumination sont les suivantes :

| | L* | a* | b* |
|---|---|---|---|
| avant | 86,7 | 49,6 | 43,5 |
| après | 71,7 | 38,7 | 19,7 |

Le marquage obtenu est rose fluorescent dans le domaine visible et devient violacé non fluorescent après une illumination U.V.

Le retour à la couleur de départ est obtenu en plus de 60 minutes.

### Exemple 4

Le colorant photochrome est différent de celui des exemples précédents mais a la même propriété ; il est incolore dans le domaine visible et vire au bleu après illumination U.V. Son pouvoir colorant est plus fort que le précédent.

Les valeurs de L*, a* et b* avant et après illumination sont les suivantes :

| | L* | a* | b* |
|---|---|---|---|
| avant | 87,5 | 52,5 | 45,1 |
| après | 74,8 | 32,3 | 24,9 |

Le marquage obtenu est orange très fluorescent dans le visible et devient ocre non fluorescent après une illumination U.V.

Le retour à la couleur de départ est obtenu en 15 minutes environ.

## Revendications

1. Composition d'encre pour le marquage et l'authentification d'objets, **caractérisée en ce qu'**elle comprend au moins :
- un colorant ou un pigment non photochrome fluorescent,
- un colorant ou un pigment photochrome, et
- un solvant
le colorant ou le pigment photochrome changeant de spectre d'absorption sous l'effet d'une première lumière émettant selon une longueur d'onde appartenant au domaine ultraviolet, de telle sorte que lorsqu'il est éclairé ensuite et seulement par une deuxième lumière émettant selon une longueur d'onde appartenant au domaine visible, il présente une couleur différente de celle qu'il présentait, sous éclairement de ladite deuxième lumière, avant son illumination par ladite première lumière, ladite couleur étant également différente de celle présentée par le colorant ou le pigment non photochrome lorsque celui-ci est éclairé par ladite deuxième lumière.

2. Composition d'encre selon la revendication 1, **caractérisée en ce qu'**elle comprend en outre une résine ou un polymère synthétique ou naturel permettant la fixation de la composition d'encre sur un support non-poreux.

3. Composition d'encre selon la revendication 1, **caractérisée en ce qu'**elle comprend en outre un sel de conductivité.

4. Composition d'encre selon la revendication 1, **caractérisée en ce qu'**elle comprend un additif choisi parmi un agent anti-moussant, un stabilisant chimique, un stabilisant U.V., un bactéricide ou un fongicide pris seuls ou en combinaison.

5. Composition d'encre selon la revendication 1, **caractérisée en ce que** le colorant ou le pigment photochrome est choisi parmi le stylbène, l'indigo, le thio-indigo, les spiropyrannes, les spirooxazines, les fulgides, les dithizonates, les endopéroxydes ou leurs dérivés.

6. Composition d'encre selon la revendication 1, **caractérisée en ce que** le solvant est l'eau ou un solvant organique.

7. Composition d'encre selon la revendication 6, **caractérisée en ce que** le solvant organique est choisi parmi les alcools, les cétones, les esters ou les hydrocarbures aromatiques.

8. Composition d'encre selon la revendication 2, **caractérisée en ce que** la résine est choisi parmi les résines acryliques, vinyliques, cétoniques, phénoliques, cellulosiques, styréniques, polyester, époxy ou polyuréthanne.

9. Composition d'encre selon la revendication 3, **caractérisée en ce que** le sel de conductivité est du thiocyanate de sodium.

10. Composition d'encre selon la revendication 1, **caractérisée en ce qu'**elle comprend jusqu'à 15% en poids environ de colorant ou de pigment non photochrome et jusqu'à 10% en poids environ de colorant ou de pigment photochrome.

11. Composition d'encre selon la revendication 1, **caractérisée en ce que** le pigment ou le colorant non photochrome est fluorescent sous illumination ultraviolette ou sous illumination dans le visible.

## Claims

1. Ink composition for marking and authenticating objects, **characterized in that** it comprises at least one non-photochromic, fluorescent pigment or dye, a photochromic pigment or dye and a solvent, the photochromic pigment or dye changing absorption spectrum under the effect of a first light emitting in a wavelength belonging to the ultraviolet range, so that when it is then illuminated and only by a second light emitting in a wavelength belonging to the visible range, it has a colour different from that which it had, under the illumination of said second light, prior to its illumination by said first light, said colour also being different from that of the non-photochromic pigment or dye when the latter is illuminated by said second light.

2. Ink composition according to claim 1, **characterized in that** it also comprises a synthetic or natural polymer or resin permitting the fixing of the ink composition on a non-porous support.

3. Ink composition according to claim 1, **characterized in that** it also comprises a conductivity salt.

4. Ink composition according to claim 1, **characterized in that** it comprises an additive chosen from among an anti-foaming agent, a chemical stabilizer, a UV stabilizer, a bactericide or a fungicide, considered singly or in combination.

5. Ink composition according to claim 1, **characterized in that** the photochromic pigment or dye is chosen from among stilbene, indigo, thio-indigo, spiropyrans, spirooxazines, fulgides, dithizonates, endoperoxides or their derivatives.

6. Ink composition according to claim 1, **characterized in that** the solvent is water or an organic solvent.

7. Ink composition according to claim 6, **characterized in that** the organic solvent is chosen from among alcohols, ketones, esters or aromatic hydrocarbons.

8. Ink composition according to claim 2, **characterized in that** the resin is chosen from among acrylic, vinyl, ketone, phenolic, cellulose, styrene, polyester, epoxy or polyurethane resins.

9. Ink composition according to claim 3, **characterized in that** the conductivity salt is sodium thiocyanate.

10. Ink composition according to claim 1, **characterized in that** it incorporates up to approximately 15 wt.% non-photochromic pigment or dye and up to about 10 wt.% photochromic pigment or dye.

11. Ink composition according to claim 1, **characterized in that** the non-photochromic dye or pigment is fluorescent under ultraviolet illumination or illumination in the visible range.

## Patentansprüche

1. Tintenzusammensetzung zur Markierung und Authentifizierung von Gegenständen, **dadurch gekennzeichnet, dass** sie mindestens
- ein nicht-photochromes fluoreszierendes Farbmittel oder Pigment,
- ein photochromes Farbmittel oder Pigment und
- ein Lösemittel umfasst,
wobei das photochrome Farbmittel oder Pigment das Absorptionsspektrum unter der Wirkung eines ersten Lichts, das mit einer zum Ultraviolettbereich gehörenden Wellenlänge strahlt, derart verändert, dass es, wenn es danach und nur mit einem zweiten Licht, das mit einer zum sichtbaren Bereich gehörenden Wellenlänge strahlt, beleuchtet wird, eine Farbe zeigt, die von der verschieden ist, die es bei Beleuchtung mit dem zweiten Licht vor der Belichtung mit dem ersten Licht zeigen würde, wobei die Farbe auch verschieden von der ist, die das nicht-photochrome Farbmittel oder Pigment zeigt, wenn dieses mit dem zweiten Licht beleuchtet wird.

2. Tintenzusammensetzung nach Anspruch 1, **dadurch gekennzeichnet, dass** sie ferner ein Harz oder ein synthetisches oder natürliches Polymer umfasst, das das Fixieren der Tintenzusammensetzung auf einem nicht-porenhaltigen Träger ermöglicht.

3. Tintenzusammensetzung nach Anspruch 1, **dadurch gekennzeichnet, dass** sie ferner ein Leitfähigkeitssalz umfasst.

4. Tintenzusammensetzung nach Anspruch 1, **dadurch gekennzeichnet, dass** sie einen Zusatzstoff, der aus einem Antischaumbildner, einem chemischen Stabilisierungsmittel, einem UV-Stabilisierungsmittel, einem Bakterizid oder einem Fungizid einzeln genommen oder in einer Kombination ausgewählt ist, umfasst.

5. Tintenzusammensetzung nach Anspruch 1, **dadurch gekennzeichnet, dass** das photochrome Farbmittel oder Pigment aus Stilben, Indigo, Thioindigo, Spiropyranen, Spirooxazinen, Fulgiden, Dithizonaten, Epidioxiden oder deren Derivaten ausgewählt ist.

6. Tintenzusammensetzung nach Anspruch 1, **dadurch gekennzeichnet, dass** das Lösemittel Wasser oder ein organisches Lösemittel ist.

7. Tintenzusammensetzung nach Anspruch 6, **dadurch gekennzeichnet, dass** das organische Lösemittel aus Alkoholen, Ketonen, Estern oder aromatischen Kohlenwasserstoffen ausgewählt ist.

8. Tintenzusammensetzung nach Anspruch 2, **dadurch gekennzeichnet, dass** das Harz aus Acrylharzen, Vinylharzen, Ketonharzen, Phenolharzen, Celluloseharzen, Styrolharzen, Polyesterharzen, Epoxyharzen oder Polyurethanharzen ausgewählt ist.

9. Tintenzusammensetzung nach Anspruch 3, **dadurch gekennzeichnet, dass** das Leitfähigkeitssalz Natriumthiocyanat ist.

10. Tintenzusammensetzung nach Anspruch 1, **dadurch gekennzeichnet, dass** sie bis zu etwa 15 Gew.-% nicht-photochromes Farbmittel oder Pigment und bis zu etwa 10 Gew.-% photochromes Farbmittel oder Pigment umfasst.

11. Tintenzusammensetzung nach Anspruch 1, **dadurch gekennzeichnet, dass** das nicht-photochrome Pigment oder Farbmittel bei Ultraviolettbeleuchtung oder Beleuchtung im Sichtbaren fluoresziert.
